# EUROPÄISCHE PATENTANMELDUNG

(11) **EP 4 636 186 A1**
(43) Veröffentlichungstag der Anmeldung: **22.10.2025**
(21) Anmeldenummer: 24171249.6
(22) Anmeldetag: 19.04.2024
(51) Int. Cl.: E04C 2/12, B32B 3/06, B32B 21/02, B32B 21/13, E04C 2/16, E04B 2/02

(54) **TRAGBARES BAUELEMENT AUS EINEM HOLZWERKSTOFF FÜR EIN MODULARES WANDSYSTEM**

(71) Anmelder: SWISS KRONO Tec AG, 6004 Luzern (CH)
(72) Erfinder: Hecht, Hendrik, 16816 Buskow (DE)
(74) Vertreter: Maikowski & Ninnemann Patentanwälte Partnerschaft mbB

(57) **Zusammenfassung**

Die vorliegende Erfindung betrifft ein tragbares Bauelement (10) aus einem Holzwerkstoff für ein modulares Wandsystem umfassend mindestens drei rechteckige, flächig miteinander verbundene (verleimte) Holzwerkstoffplatten, wobei mindestens eine innere Holzwerkstoffplatte (12) zwischen zwei die Außenseiten des Bauelementes bildenden äußeren Holzwerkstoffplatten (11a, 11b) angeordnet ist, wobei die mindestens eine innere Holzwerkstoffplatte (12) in Bezug auf die zwei äußeren Holzwerkstoffplatten (11a, 11b) in x-y-Richtung um einen vorbestimmten x-Wert und einen vorbestimmten y-Wert derart verschoben ist, so dass die innere Holzwerkstoffplatte an zwei benachbarten Seitenkanten um den vorbestimmten x-Wert und vorbestimmten y-Wert zwischen den zwei äußeren Holzwerkstoffplatten unter Ausbildung eines Vorsprungs/Federvorsprungs hervorsteht, und an den zwei den hervorstehenden Seitenkanten gegenüberliegenden Seitenkanten um den vorbestimmten x-Wert und vorbestimmten y-Wert in Bezug zwischen den zwei äußeren Holzwerkstoffplatten unter Ausbildung einer Nut eingeschoben ist. Die vorliegende Erfindung betrifft ebenfalls ein modulares Wandsystem herstellbar aus diesen tragbaren Bauelementen.

## Beschreibung

Die vorliegende Erfindung betrifft ein tragbares Bauelement aus einem Holzwerkstoff für ein modulares Wandsystem und ein modulares Wandsystem umfassend ein oder mehrere dieser tragbaren Bauelemente.

### Beschreibung

Holzwerkstoffplatten bilden die Basis vieler Gegenstände des täglichen Lebens, beispielsweise von Möbeln, oder Belägen für Wand, Boden oder Decke. So sind Holzwerkstoffplatten unter anderem aus der Verwendung als Wandpaneele als Dämmstoffplatten für den Innen- und Außenbereich oder auch als Konstruktionselemente bekannt. Derartige Holzwerkstoffplatten werden üblicherweise aus Holzspänen, Holzfasern oder Holzstrands hergestellt. Holzwerkstoffplatten umfassen u.a,.Hochdichte Faserplatten (HDF), Mitteldichte Faserplatten (MDF), Holzspanplatten, Holzsperrholzplatten oder Holz-Kunststoff-Mischungen (WPC).

Grobspanplatten, auch OSB-Platten (oriented strand boards) genannt, sind Holzwerkstoffplatten, die aus langen Spänen (strands) hergestellt werden. Die ursprünglich als Abfallprodukte der Furnier- und Sperrholzindustrie anfallenden OSB-Platten werden jedoch zunehmend im Holz- und Fertighausbau eingesetzt, da OSB-Platten leicht sind und trotzdem die an Bauplatten gesetzten statischen Anforderungen erfüllen. So werden OSB-Platten als Bauplatten und als Wand- oder Dachbeplankung oder auch im Fußbodenbereich eingesetzt.

OSB-Platten erfreuen sich nicht zuletzt auf Grund ihrer Nachhaltigkeit immer größerer Beliebtheit und vielfältiger Anwendung, beispielsweise als Konstruktionselement beim Hausbau oder als Schalung im Betonbau.

Die Produktion von OSB-Platten erfolgt in einem mehrstufigen Prozess, wobei zuerst die Späne aus entrindetem Holz, vorzugsweise Weichhölzern, in Längsrichtung durch Drehklingen geschnitten werden. Im anschließenden Trocknungsprozess wird die natürliche Feuchtigkeit der Späne bei hohen Temperaturen verringert. Der Feuchtigkeitsgrad der Späne kann abhängig vom verwendeten Klebstoff variieren. Nach dem Trocknungsprozess werden die Späne einer Klebevorrichtung zugeführt, in der der Leim auf die Späne aufgebracht wird. PMDI (Polymeres Diphenylmethandiisocyanat) oder MUPF-Harz (Melamin-Harnstoff-Phenol-Formaldehyd) werden vorwiegend als Klebstoffe verwendet. Anschließend werden die geleimten Späne abwechselnd der Länge und der Breite nach zur Produktionsrichtung verteilt, sodass die Späne in mindestens drei Schichten (untere Schicht, mittlere Schicht, obere Schicht) kreuzweise angeordnet sind. Darauf folgt ein kontinuierliches Pressen der Späne bei hohem Druck und hoher Temperatur.

Die OSB-Platten können mit einem speziellen Plattenverbindungssystem (einem Nut- und Federverbindungssystem) verbunden werden. Dabei werden die OSB-Platten derart verbunden, dass die Feder einer Platte in die Nut der anderen Platte geschoben wird. Ferner kann ein Befestigungsmittel, wie eine Schraube oder eine Klammer, in den Boden der Nut eingesetzt werden. Der Kopf des Befestigungsmittels, wie der Kopf der Schraube, wird dann durch Einsetzen der Feder der anderen Platte abgedeckt. Die Feder- und Nutverbindung wird schließlich mit einem geeigneten Klebstoff, wie einem Polyurethanklebstoff geklebt. Solche Nut- und Federverbindungen sind bekannt und werden in verschiedenen Systemen verwendet, wie zum Verbinden von Badezimmerpaneele (die zum Beispiel von einem Hersteller wie Fibi-Trespo, SE, verwendet werden).

Wie erwähnt, können OSB-Platten als Baupaneele insbesondere im Fertigteilhausbau verwendet werden (siehe z.B. WO 2016/206995 A1). Wenn beispielsweise die OSB-Platten für einen Wandaufbau verwendet werden, besteht die Wand aus einem massiven Holzrahmen, der mit geeigneten Balken (insbesondere I-Balken) gefüllt und von beiden Seiten mit den OSB-Platten abgedeckt ist.

Die in der WO 2016/206995 A1 beschriebenen Bauwände werden als Komplettbauwände verwendet und weisen entsprechende Wandabmaße und ein entsprechend hohe Gewichte auf. Transport und Aufbau derartiger Komplettbauwände erfordern daher Schwertransporter und Baukräne auf; d.h. die erforderliche Logistik ist komplex.

Neben der komplexen Transportlogistik eignen sich derartige Komplettbauwände auch nicht für die Errichtung von weniger komplexen Wandsystemen, wie z.B. Wandsysteme für Garagen, Gartenhäuser, Carports und ähnliches, die insbesondere von Zimmereibetrieben oder Privatpersonen errichtet werden.

Es war daher Aufgabe der vorliegenden Erfindung ein Bausystem zur Errichtung von Wandsystemen oder Gebäudewänden zur Verfügung zu stellen, welches keine komplexe Logistik erfordert, und es erlaubt, flexibel und kostengünstig ohne viel Hilfsmittel oder Sonderfahrzeuge einfache Wandsysteme manuell und per Hand aufzustellen und somit insbesondere zur Anwendung durch kleinere Bauunternehmer oder Privatlaute geeignet ist.

Diese Aufgabe wird durch ein tragbares Bauelement mit den Merkmalen des Anspruchs 1 und einem unter Verwendung des tragbaren Bauelementes erstellbare Wandsystems mit den Merkmalen des Anspruchs 8 gelöst.

### Bauelement

Entsprechend wird ein tragbares Bauelement aus einem Holzwerkstoff für ein modulares Wandsystem bereitgestellt, wobei das tragbare Bauelement folgendes umfasst:
mindestens drei flächig miteinander verbundene (verleimte) Holzwerkstoffplatten, wobei mindestens eine innere Holzwerkstoffplatte zwischen zwei die Außenseiten des Bauelementes bildenden äußeren Holzwerkstoffplatten angeordnet ist,
wobei die mindestens eine innere Holzwerkstoffplatte in Bezug auf die zwei äußeren Holzwerkstoffplatten in x-y-Richtung (d.h. in 2 dimensionaler Richtung) um einen vorbestimmten x-Wert und einen vorbestimmten y-Wert derart verschoben ist,
so dass die innere Holzwerkstoffplatte an zwei benachbarten Seitenkanten um den vorbestimmten x-Wert und vorbestimmten y-Wert zwischen den zwei äußeren Holzwerkstoffplatten unter Ausbildung eines Vorsprungs/Federvorsprungs hervorsteht, und an den zwei den hervorstehenden Seitenkanten gegenüberliegenden Seitenkanten um den vorbestimmten x-Wert und vorbestimmten y-Wert zwischen den zwei äußeren Holzwerkstoffplatten unter Ausbildung einer Nut eingeschoben ist.

Es wird somit ein tragbares Bauelement aus einem Holzwerkstoff bereitgestellt, welches mit weiteren gleichartigen Bauelementen unter Ausbildung einer stabilen Fläche, z.B. einer stabilen Wand als Teils eines vertikalen Baukörpers manuell zusammengefügt werden kann. Besonderes vorteilhaft ist, dass die Abmaße des Bauelementes derart sind, dass eine Person dieses selbsttätig ohne Verwendung eines Hilfsmittels, wie z.B. eines Krans, heben und einbauen kann.

Das tragbare Bauelement besteht aus mehreren gleich großen, bevorzugt rechteckigen Plattenteilen, wie z.B. einer OSB-Platte der Güte OSB-4 oder anderen Holzmaterialien, wie hochverdichteten Holzfaserplatten oder Sperrholzplatten, die über deren großflächige Seiten kraft- und formschlüssig miteinander verbunden sind, wobei wenigstens eines der mehreren Plattenteile gegenüber mindestens einem der anderen Plattenteile derart versetzt angeordnet ist, das an zwei benachbarten Seitenflächen bzw. Seitenkanten des tragbaren Bauelements Nuten und an zwei den Nuten gegenüberliegenden zwei benachbarten Seitenflächen bzw. Seitenkanten des tragbaren Bauelements Federn ausgebildet werden.

Die tragbaren Bauelemente werden zu einem Wandsystem oder Wandverbund zusammengesteckt, indem Federn und Nuten der tragbaren Bauelemente in einen Formschluss gebracht werden. Durch das Zusammenstecken einer Vielzahl solcher tragbaren Bauelemente entsteht ein in vertikaler Richtung erstreckender sich selbst tragender Verbund in Form einer Wand.

In einer Ausführungsform ist vorgesehen, dass das (komplette, aus den drei einzelnen Holzwerkstoffplatten wie z.B. OSB-Platten zusammengefügte) Bauelement ein Durchschnittsgewicht zwischen 10 und 25 kg, bevorzugt zwischen 12 und 20 kg, insbesondere bevorzugt zwischen 15 und 17 kg aufweist. Das Bauelement weist somit ein Gewicht auf, welches ein manuelles Heben, Tragen, Einsetzen des Bauelementes durch eine Person erlaubt, die Verwendung von Hebekränen oder anderen schweren Transportsystemen ist nicht erforderlich oder notwendig.

Die zu dem tragbaren Bauelement zusammengefügten Holzwerkstoffplatten liegen bevorzugt in rechteckiger Form vor, können aber auch in quadratischer Form vorliegen. Bevorzugt werden Holzwerkstoffplatten mit gleichen Abmaßen zu einem Bauelement zusammengefügt.

In einer bevorzugten Ausführungsform weist jede einzelne der zum Bauelement zusammengefügten Holzwerkstoffplatten folgende Dimensionen auf:
- Länge zwischen 300 - 1000 mm, bevorzugt zwischen 400 - 800 mm, insbesondere bevorzugt zwischen 500 - 600 mm,
- Breite zwischen 300 - 1000 mm, bevorzugt zwischen 400 - 800 mm, insbesondere bevorzugt zwischen 500 - 600 mm, und
- Dicke zwischen 20-30 mm, bevorzugt zwischen 22 -28 mm, besonders bevorzugt zwischen 24- 26 mm, z.B. 25 mm.

Entsprechend weist das nach der Verleimung von mindestens drei einzelnen Holzwerkstoffplatten, hergestellte Bauelement eine Dicke zwischen 60-90 mm, bevorzugt zwischen 66 -84 mm, besonders bevorzugt zwischen 72- 78 mm, z.B. 75 mm auf. Als Leim bzw. Bindemittel kann ein Polyurethanklebstoff verwendet werden.

Wie bereits erwähnt, weist das vorliegende Bauelement zwei äußere Holzwerkstoffplatte und eine zwischen den zwei äußeren Holzwerkstoffplatten angeordnete innere Holzwerkstoff auf, welche in Bezug auf die zwei äußeren Holzwerkstoffplatten in x-y-Richtung verschoben ist. In einer Ausführungsform ist vorgesehen, dass die mindestens eine innere Holzwerkstoffplatte in x- und y-Richtung um einen Wert in Bezug auf die zwei äußeren Holzwerkstoffplatten verschoben ist, der zwischen 5 - 25 %, bevorzugt zwischen 10 - 20% der Länge bzw. Breite der verwendeten Holzwerkstoffplatten beträgt.

Das bedeutet, dass bei Verwendung von Holzwerkstoffplatten mit einer Länge von 60 cm und einer Breite von 60 cm, die Breite des Vorsprungs bzw. der Feder zwischen 3 und 15 cm, bevorzugt zwischen 6 und 12 cm liegt und die Tiefe der (jeweils gegenüberliegenden) Nut zwischen 3 und 15 cm, bevorzugt zwischen 6 und 12 cm beträgt.

Die Dicke (oder Breite) des Federvorsprungs und die Dicke (oder Breite) der durch die Verschiebung gebildeten Nut entsprechen der Dicke einer einzelnen (inneren) Holzwerkstoffplatte. Federvorsprung und Nut des tragbaren Bauelementes können demnach eine Dicke zwischen 20-30 mm, bevorzugt zwischen 22 -28 mm, besonders bevorzugt zwischen 24- 26 mm, z.B. 25 mm aufweisen.

Wie bereits angedeutet, können die verwendeten Holzwerkstoffplatten auf verschiedenen Zusammensetzungen basieren. Mögliche Holzwerkstoffplatten, die vorliegend zum Einsatz kommen können, sind OSB-Platten, Holzspanplatten, Holzsperrholzplatten, Platten aus Konstruktionsvollholz und Brettschichtholz oder WPC-Platten. Generell ist jedes Holzmaterial oder Holzkompositmaterial mit einer für Wände geeigneten Stabilität und Steifigkeit geeignet,

In einer bevorzugten Ausführungsform werden OSB-Platten für die Herstellung der Bauelemente verwendet.

In einer Ausführungsform beträgt die Rohdichte jeder einzelnen der OSB-Platten zwischen 500 und 1000 kg/Kubikmeter, bevorzugt zwischen 500 und 800 Kilogramm/Kubikmeter, insbesondere bevorzugt zwischen 600 und 700 Kilogramm/Kubikmeter.

Die vorliegend verwendeten OSB-Platten beruhen auf Holzspänen mit einer Länge zwischen 50 und 200 mm, vorzugsweise 70 und 180 mm, besonders bevorzugt 90 bis 150 mm und einer Breite zwischen 5 und 50 mm, vorzugsweise 10 bis 30 mm, besonders bevorzugt 15 bis 20 mm und einer Dicke zwischen 0,1 und 2 mm, vorzugsweise zwischen 0,3 und 1,5 mm, besonders bevorzugt zwischen 0,4 und 1 mm.

Die zur Herstellung des tragbaren Bauelementes verwendeten OSB-Platten entsprechen der Nutzungsklasse 4 gemäß der Norm EN 300. OSB-Platten sind je nach Einsatzgebiet entsprechend EN 300 in verschiedene Klassen eingeteilt, wobei gilt je höher die Zahl, desto hochwertiger ist die OSB Platte. Unterschieden wird zwischen OSB/1, OSB/2, OSB/3 und OSB/4. OSB-Platten der Nutzungsklasse 1 und 2 sind jeweils für den Innenausbau im Trockenbereich anwendbar, wohingegen OSB Platten der Nutzungsklasse 3 und Nutzungsklasse 4 werden jeweils im Feuchtbereich für tragende Zwecke eingesetzt werden. OSB Platten mit Nutzungsklasse 4 sind besonders belastbar und weisen hohe Biegefestigkeitswerte auf. Sie werden im Feuchtbereich für tragende Zwecke genutzt

### Wandsystem

Wie oben erwähnt, werden die tragbaren Bauelemente der vorliegenden Erfindung zur Errichtung eines modularen Wandsystems verwendet. Solch ein modulares Wandsystem umfasst mindestens zwei oder mehr der erfindungsgemäßen tragbaren Bauelemente.

Besonders vorteilhaft ist, wenn auf dem Boden und/oder an der/den Stirnseite/n der zu errichtenden Wand eine Montageschiene vorgesehen ist, die jeweils kraftschlüssig mit einem vorhandenen Baukörper, insbesondere Bauboden, Bauwand, Baudecke oder Baurahmen bzw. weitere geeignete Systeme verbunden werden und an denen die trabgaren Bauelemente gleichfalls mittels Nut und Feder fluchtend auf- bzw. angesteckt werden.

In einer Ausführungsform ist demnach vorgesehen, dass neben den tragbaren Bauelementen mindestens eine Montageschiene (oder Montageschwelle) Teil des modularen Wandsystems ist, wobei die mindestens eine Montageschiene zur Befestigung des modularen Bausystems auf dem Boden und/oder an einer Wand, insbesondere auf dem Boden eines bereits vorhandenen Baukörpers und/oder an einer Wand eines bereits vorhandenen Baukörpers, vorgesehen ist. Die Montageschiene ist bevorzugt kraftschlüssig mit dem Baukörper verbunden.

In einer Ausführungsform umfasst die mindestens eine Montageschiene zur Befestigung des modularen Bausystems einen Vorsprung zum Eingriff in mindestens eine Nut von mindestens tragbaren Bauelementes. Hierdurch ist ein Aufstecken des tragbaren Bauelements auf den Vorsprung der Montageschiene möglich. Eine derartige Montageschiene mit Vorsprung ist insbesondere auf dem Boden und einer Wand eines Baukörpers zur formschlüssigen Verbindung mit einem tragbaren Baudelement an der Unterseiten und/oder einer Stirnseite des modularen Wandsystems vorgesehen

Die Montageschiene kann als Vorsprung z.B. eine Latte aufweisen, wobei Abmaße des Vorsprungs, insbesondere Dicke und Breite des Vorsprunges, an die Abmaße der Nut, insbesondere an Tiefe und Breite der Nut des tragbaren Bauelementes angepasst sind.

In einer anderen Ausführungsform ist vorgesehen, dass die mindestens eine Montageschiene zur Befestigung des modularen Bausystems eine Nut umfasst, in welche ein Federvorsprung von mindestens einem tragbaren Bauelement eingreifen kann. In diesem Falle sind die Abmaße der Nut der Montageschiene an die Abmaße des Federvorsprungs des tragbaren Bauelementes angepasst. Eine derartige Montageschiene mit Nut ist insbesondere an einer Stirnseite und/oder ggfs. an der Oberseite eines Baukörpers zur formschlüssigen Verbindung mit einem tragbaren Baudelement an Stirnseite und/oder Oberseite des modularen Wandsystems vorgesehen.

In einer weiteren Ausführungsform des vorliegenden Wandsystems sind weitere Befestigungsmittel zur Verbindung der tragbaren Bauelementen untereinander und/oder mit den Montageschienen vorgesehen.

Geeignete Befestigungsmittel sind u.a. Nägel, Schrauben (z.B. Holzschraube) oder auch ein geeignetes Leimsystem.

Das Leimsystem kann in einer Nut eines tragbaren Bauelementes und/oder in einer Nut eines Montageschiene vorgesehen sein. Das Leimsystem kann in der jeweiligen Nut als freier Leim oder in einem Leimschlauch oder Leimschnur, vorgesehen sein. Der Leimschlauch bzw. der im Leimschlauch enthaltende Leim dient zur Unterstützung der Verbindung des Bauelementes mit der Latte bzw. Feder durch Verklebung.

Der Leimschlauch kann perforiert ausgeführt sein und bildet in diesen Bereichen definierter Schwächung eine Sollbruchstelle für leichteres Öffnen aus. Bei einem Zusammenbringen und Zusammendrücken von Bauelement und Latte / Feder erfolgt aufgrund der dabei angewendeten Kräfte beziehungsweise des aufgebrachten Drucks ein Öffnen bzw. eine Zerstörung des in der Nut eingelegten Leimschlauches. Der Klebstoff wird freigesetzt und verteilt sich in dem Bereich der Nut.

Es ist insbesondere bevorzugt, wenn der mindestens eine Leimschlauch als durchgängiger Schlauch, zum Beispiel in Form eines extrudierten Schlauches, ausgebildet ist, der den Leim bzw. Klebstoff enthält.

In einer anderen Ausführungsform ist der mindestens eine Leimschlauch entlang seiner Länge in einzelne Segmente bzw. Kammern unterteilt. Die Segmente bzw. Kammern sind bevorzugt von gleicher Größe, das heißt weisen gleiche Volumina zur Aufnahme einer gleichen Menge an Klebstoff auf. Die Segmente bzw. Kammern können durch Schweißnähte oder sogenannte Siegelstellen z.B. mit einer Breite zwischen 1 und 3 mm, bevorzugt 2 mm gebildet werden. Auch ist eine Unterteilung des Schlauches in Segmente unter Verwendung von Perforationslinien möglich, wobei die Perforationslinien sich auf der Oberseite- und/oder der Unterseite des Leimschlauches befinden können.

In einer Ausführungsform weist der Leimschlauch einen Durchmesser zwischen 3 und 10 mm, bevorzugt 5 und 9 mm auf. Die Länge eines einzelnen Segmentes des Leimschlauches kann zwischen 100 und 200 mm, bevorzugt zwischen 130 und 180 mm, insbesondere bevorzugt zwischen 150 und 170 mm betragen.

Die Verwendung eines Leimschlauches mit durch Siegelstellen voneinander getrennten Segmenten weist verschiedene Vorteile auf. So tritt bei Beschädigungen des Leimschlauches während des Transports, der Lagerung oder der Verarbeitung bei einer Segmentierung lediglich der Klebstoff bzw. der Leim aus dem beschädigten Segment aus und entsprechend wird ein Leerlaufen des gesamten Leimschlauches verhindert. Des Weiteren ermöglicht eine Segmentierung des Leimschlauches auch die Verarbeitung von unterschiedlichen Formaten an Holzwerkstoffplatten, da diese im Format nur ein Vielfaches der Einzelsegmentlänge der Leimschlauchsegmente entsprechen müssen (ein Trennen des Leimschlauches in der Siegelstelle ist problemlos möglich).

In einer weiteren Ausführungsform besteht der Leimschlauch aus einem Kunststoffmaterial. Das Kunststoffmaterial sollte dabei so ausgewählt sein, dass es über eine bestimmte Festigkeit verfügt, so dass ein Aufreißen des Schlauches während der Herstellung und dem Transport der Platten vermieden wird, jedoch beim Verarbeitung der Platten geöffnet werden kann. Besonders bevorzugtes Kunststoffmaterial, das hier zum Einsatz kommt, ist Polyethylenterephthalat (PET), Polyamid (PA) und/oder Polyethylen (PE) oder eine Mischung davon. Es können aber auch beliebig andere Folien oder Verbundfolien zur Herstellung des Leimschlauches verwendet werden. Im Falle der Verwendung einer Polyamidfolie als Schlauchmaterial weist diese eine Dicke bzw. Stärke zwischen 50 und 100 µm, bevorzugt zwischen 70 und 80 µm auf.

Der vorliegend zum Einsatz kommende Klebstoff ist ausgewählt aus der Gruppe enthaltend Polyurethane, Polyvinyle und Acrylate. Als besonders vorteilhaft ist die Verwendung von wasserhaltigen Klebestoffformulierungen wie Polyvinylacetat (PVAC) oder Ethylenvinylacetat (EVA). Selbstverständlich können auch andere Leime mit Wasser als Lösemittel eingesetzt werden. In einer Ausführungsform kann als Klebstoff ein PVAC Leim mit einem Feststoffgehalt zwischen 50 und 80 Gew.%, bevorzugt zwischen 60 und 79 Gew.%, insbesondere bevorzugt von 65 Gew.% verwendet werden.

In einer weiteren Ausführungsform des vorliegenden Wandsystems ist vorgesehen, dass mindestens eine Seite des Wandsystems (nach fertigem Aufbau) mit mindesten einer Lage einer Papierschicht, bevorzugt mit zwei Lagen von Papierschichten, versehen ist.

Geeignete Papiere, die zur Beschichtung von Wänden aus Holzwerkstoffen, wie z.B. OSB-Wänden verwendet werden können, sind harzimprägnierte Papiere oder Rohpapiere. Besonders bevorzugt ist, wenn zwei Papierlagen aus jeweils einem harzimprägnierten Papier und einem Rohpapier verwendet werden.

Das für die Imprägnierung verwendete Harz ist bevorzugt ein Formaldehydharz, insbesondere ausgewählt aus einer Gruppe umfassend Melamin-Formaldehydharz, Harnstoff-Formaldehydharz und Melamin-Harnstoff-Formaldehydharz. Das harzimprägnierte Papier weist ein Gewicht im Bereich zwischen 30 und 200 g/m², vorzugsweise zwischen 50 und 150 g/m², insbesondere vorzugsweise zwischen 80 und 120 g/m² auf.

Das Gewicht des Rohpapiers liegt typsicherweise in einem Bereich zwischen 100 und 300 g/m², vorzugsweise zwischen 100 und 250 g/m², insbesondere vorzugsweise zwischen 100 und 120 g/m². Bei Anordnung eines Rohpapiers als eine äußere Schicht auf einer OSB-Platte wird ein geeignetes Substrat erhalten, das einen direkten Auftrag von Gips, Spachtelmasse und Tapetenkleister erlaubt.

Eine solche mit Papierlagen beschichtete OSB-Wandsystems kann als Alternative zu den Gipsplatten verwendet werden. Die physikalischen und mechanischen Eigenschaften des mit Papierlagen beschichteten Wandsystems erlauben eine Installation von schweren Elementen eines Innenausbaus ohne Spezialdübel. Die äußere Schicht des Wandsystems kann ohne weitere Grundierung zum Ausmalen oder Tapezieren verwendet werden.

Ein weiterer Vorteil ist das Auftragen von Gips, um das mit Papierlagen beschichtete Wandsystem mit Acrylanstrichen zu beschichten oder Tapeten auf die Platte zu kleben.

Die vorliegende Erfindung wird im Folgenden anhand von Ausführungsbeispielen mit Bezug auf die Figuren im Detail erläutert. Es zeigen:
- Figur 1A: eine erste Ansicht eines tragbaren Bauelementes gemäß der vorliegenden Erfindung;
- Figur 1B: eine zweite Ansicht eines tragbaren Bauelementes gemäß der vorliegenden Erfindung;
- Figur 1C: eine dritte Ansicht eines tragbaren Bauelementes gemäß der vorliegenden Erfindung;
- Figur 2A: eine Ansicht eines modularen Wandsystems aus tragbaren Bauelementen gemäß der vorliegenden Erfindung.;
- Figur 2B: ein Ausschnitt aus einem modularen Wandsystems gemäß der vorliegenden Erfindung, der die Verbindung von zwei tragbaren Bauelementen zeigt.

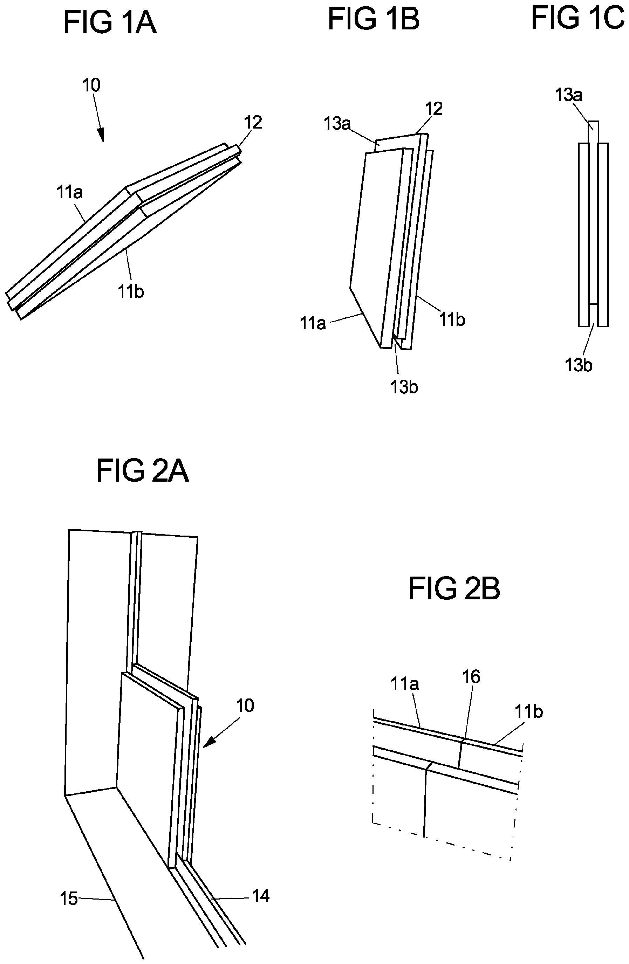

Figur 1 A-C zeigt verschieden Ansichten einer Ausführungsform des tragbaren Bauelementes 10. Das tragbare Bauelement besteht aus drei gleich großen, rechteckigen Plattenteilen, wie z.B. einer OSB-Platte der Güte OSB-4, die über deren großflächige Seiten miteinander verbunden sind. Typischerweise sind die OSB-Plattenteile miteinander verleimt. Entsprechend weist das nach der Verleimung von mindestens drei einzelnen OSB-Platten mit einer Dicke von jeweils 25 mm das hergestellte Bauelement eine Gesamtdicke von 75 mm auf.

Anstatt OSB-Platten können auch hochverdichtete Holzfaserplatten, OSB-Platten, Holzspanplatten, Holzsperrholzplatten, Platten aus Konstruktionsvollholz und Brettschichtholz oder WPC-Platten mit diesen Abmessungen verwendet werden.

Die zwei äußeren OSB-Platten 11a, 11b schließen die innere OSB-Platte 12 ein, wobei die innere OSB-Platte 12 gegenüber den zwei äußeren OSB-Platten 11a, 11b versetzt bzw. verschoben angeordnet ist. Die innere OSB-Platte 12 steht an zwei benachbarten Seitenkanten um den vorbestimmten x-Wert und vorbestimmten y-Wert zwischen den zwei äußeren OSB-Platten 11a, 11b unter Ausbildung eines Vorsprungs/Federvorsprungs 13a hervor. An den zwei den hervorstehenden Seitenkanten gegenüberliegenden Seitenkanten ist die innere OSB-Platte um den vorbestimmten x-Wert und vorbestimmten y-Wert zwischen den zwei äußeren OSB-Platten unter Ausbildung einer Nut 13b eingeschoben.

Das tragbare Bauelement weist somit an zwei benachbarten Seitenflächen bzw. Seitenkanten des tragbaren Bauelements Nuten 13b und an zwei den Nuten gegenüberliegenden zwei benachbarten Seitenflächen bzw. Seitenkanten des tragbaren Bauelements Federn 13a auf.

Die Verschiebung der inneren OSB-Platte 12 in x- und y-Richtung in Bezug auf die zwei äußeren OSB-Platten 11a, 11b kann zwischen 10 - 20% der Länge bzw. Breite der verwendeten OSB-Platten betragen. Bei Verwendung von OSB Platten mit einer Länge von 60 cm und einer Breite von 60 cm beträgt die Breite des Vorsprungs bzw. der Feder zwischen 6 und 12 cm und die Tiefe der (jeweils gegenüberliegenden) Nut zwischen 6 und 12 cm.

Die Dicke (oder Breite) des Federvorsprungs 13a und die Dicke (oder Breite) der durch die Verschiebung gebildeten Nut 13b entsprechen der Dicke der inneren OSB-Platte 12 von 25 mm.

Figur 2A zeigt einen Ausschnitt aus einem Wandsystem mit einem tragbaren Bauelement 10.

Die tragbaren Bauelemente werden zu einem Wandsystem oder Wandverbund zusammengesteckt, indem Federn und Nuten der tragbaren Bauelemente 11a, 11b in einen Formschluss 16 (Fig. 2B) gebracht werden. Durch das Zusammenstecken einer Vielzahl solcher tragbaren Bauelemente entsteht ein in vertikaler Richtung erstreckender sich selbst tragender Verbund in Form einer Wand.

Für die Montage ist auf dem Boden und/oder an der/den Stirnseite/n der zu errichtenden Wand eine Montageschiene 14 vorgesehen, die jeweils kraftschlüssig mit einem vorhandenen Baukörper 15 verbunden werden und an denen die trabgaren Bauelemente gleichfalls mittels Nut und Feder fluchtend auf- bzw. angesteckt werden.

## Patentansprüche

1. Tragbares Bauelement aus einem Holzwerkstoff für ein modulares Wandsystem umfassend
mindestens drei rechteckige, flächig miteinander verbundene (verleimte) Holzwerkstoffplatten, wobei mindestens eine innere Holzwerkstoffplatte zwischen zwei die Außenseiten des Bauelementes bildenden äußeren Holzwerkstoffplatten angeordnet ist,
Wobei die mindestens eine innere Holzwerkstoffplatte in Bezug auf die zwei äußeren Holzwerkstoffplatten in x-y-Richtung um einen vorbestimmten x-Wert und einen vorbestimmten y-Wert derart verschoben ist,
so dass die innere Holzwerkstoffplatte an zwei benachbarten Seitenkanten um den vorbestimmten x-Wert und vorbestimmten y-Wert zwischen den zwei äußeren Holzwerkstoffplatten unter Ausbildung eines Vorsprungs/Federvorsprungs hervorsteht, und an den zwei den hervorstehenden Seitenkanten gegenüberliegenden Seitenkanten um den vorbestimmten x-Wert und vorbestimmten y-Wert zwischen den zwei äußeren Holzwerkstoffplatten unter Ausbildung einer Nut eingeschoben ist.

2. Bauelement nach einem der vorhergehenden Ansprüche, **dadurch gekennzeichnet, dass** das (komplette) Bauelement ein Durchschnittsgewicht zwischen 10 und 25 kg, bevorzugt zwischen 12 und 20 kg, insbesondere bevorzugt zwischen 15 und 17 kg aufweist.

3. Bauelement nach einem der vorhergehenden Ansprüche, **dadurch gekennzeichnet, dass** jede einzelne der Holzwerkstoffplatten folgende Dimensionen aufweist:
- Länge zwischen 300 - 1000 mm, bevorzugt zwischen 400 - 800 mm, insbesondere bevorzugt zwischen 500 - 600 mm,
- Breite zwischen 300 - 1000 mm, bevorzugt zwischen 400 - 800 mm, insbesondere bevorzugt zwischen 500 - 600 mm, und
- Dicke zwischen 20-30 mm, bevorzugt zwischen 22 -28 mm, besonders bevorzugt zwischen 24- 26 mm.

4. Bauelement nach einem der vorhergehenden Ansprüche, **dadurch gekennzeichnet, dass** die mindestens eine innere Holzwerkstoffplatte in x- und y-Richtung um einen Wert verschoben ist, der zwischen 5 - 25 %, bevorzugt zwischen 10 - 20% der Länge bzw. Breite der verwendeten Holzwerkstoffplatten beträgt.

5. Bauelement nach einem der vorhergehenden Ansprüche, **dadurch gekennzeichnet, dass** die Dicke des Federvorsprungs und die Dicke (bzw. Breite) der durch die Verschiebung gebildeten Nut der Dicke einer einzelnen (inneren) Holzwerkstoffplatte entsprechen.

6. Bauelement nach einem der vorhergehenden Ansprüche, **dadurch gekennzeichnet, dass** als Holzwerkstoffplatten hochverdichtete Holzfaserplatten, OSB-Platten, Holzspanplatten, Holzsperrholzplatten, Platten aus Konstruktionsvollholz und Brettschichtholz oder WPC-Platten verwendet werden.

7. Bauelement nach einem der vorhergehenden Ansprüche, **dadurch gekennzeichnet, dass** jede einzelne der Holzwerkstoffplatten aus OSB-Material, insbesondere der Nutzungsklasse 4, besteht.

8. Modulares Wandsystem umfassend mindestens zwei oder mehr der tragbaren Bauelemente nach einem der vorhergehenden Ansprüche.

9. Modulares Wandsystem nach Anspruch 8, **gekennzeichnet durch** mindestens eine Montageschiene, wobei die mindestens eine Montageschiene zur Befestigung des modularen Bausystems auf dem Boden und/oder an einer Wand, insbesondere auf dem Boden eines bereits vorhandenen Baukörpers und/oder an einer Wand eines bereits vorhandenen Baukörpers, vorgesehen ist.

10. Modulares Wandsystem nach Anspruch 9, **dadurch gekennzeichnet, dass** die mindestens eine Montageschiene zur Befestigung des modularen Bausystems einen Vorsprung zum Eingriff in mindestens eine Nut von mindestens einem der tragbaren Bauelementes umfasst.

11. Modulares Wandsystem nach Anspruch 9, **dadurch gekennzeichnet, dass** die mindestens eine Montageschiene zur Befestigung des modularen Bausystems eine Nut umfasst, in welche ein Federvorsprung von mindestens einem der tragbaren Bauelement eingreifen kann.

12. Modulares Wandsystem nach einem der Ansprüche 8-11, **dadurch gekennzeichnet, dass** weitere Befestigungsmittel zur Verbindung der mindestens zwei tragbaren Bauelementen untereinander und/oder mit den Montageschienen vorgesehen sind.

13. Modulares Wandsystem nach einem der Ansprüche 8-12, **dadurch gekennzeichnet, dass** zusätzliche ein Leimsystem zur Verbindung der mindestens zwei tragbaren Bauelemente vorgesehen ist.

14. Modulares Wandsystem nach einem der Ansprüche 8-13, **dadurch gekennzeichnet, dass** mindestens eine Seite des Wandsystems (nach fertigem Aufbau) mit mindesten einer Lage einer Papierschicht, bevorzugt mit zwei Lagen von Papierschichten, versehen wird.
